# EUROPEAN PATENT APPLICATION

(11) **EP 2 963 561 A1**
(43) Date of publication of application: **06.01.2016**
(21) Application number: 15171680.0
(22) Date of filing: 11.06.2015
(51) Int. Cl.: G06F 17/22, G06F 17/24

(54) **METHOD AND DEVICE FOR UPDATING USER DATA**

(30) Priority: 12.06.2014 CN 201410260916
(71) Applicant: Xiaomi Inc., Beijing 100085 (CN)
(72) Inventor: Zhang, Lei, 100085 Beijing (CN)
(74) Representative: Delumeau, François Guy

(57) **Abstract**

A method and a device for updating user data are disclosed. The method includes: acquiring (201) an original character string, which corresponds to a quoted content in user data, in an electronic publication before revision; recognizing (202) the original character string in the electronic publication after revision; and when the recognizing is successful, updating (203) the quoted content in the user data according to a recognizing result to obtain updated user data.

## Description

### TECHNICAL FIELD

The present disclosure relates to electronic publication field, and more particularly, to a method and a device for updating user data.

### BACKGROUND

Electronic publications are increasingly favored due to their short revision cycle and low revision costs. When reading electronic publications, users may generate user data such as bookmarks, annotations and digests. The user data may include: quoted contents and user reading information regarding the quoted contents.

The quoted contents in user data are generally represented by physical offsets. That is to say, a quoted content may be represented by (position, length), wherein the 'position' represents a text offset position of the quoted content in the whole electronic publication, and the 'length' represents a text length of the quoted content. For example, an annotation may be expressed as "quoted content (the 120,305^{th} character, total of 32 characters), annotation content (this paragraph writes so well)". However, because electronic publications may be revised many times, the quoted contents represented by the physical offsets are inclined to be changed after addition and deletion of contents in the electronic publications. Therefore, related technology provides a method for updating user data: when an electronic publication is revised, detailed revision records of every version is recorded in manners similar to Patch files, and the quoted contents in the user data is recalculated by the revision records.

However, during devising of the present disclosure, it is founded that the above method at least has the following defects: because generation the Patch files causes very high computation costs and needs to be maintained separately, the above method for updating user data is not applicable for widespread use.

### SUMMARY

To solve the problem that generation the Patch files causes very high computation costs and needs to be maintained separately and the above method for updating user data is not applicable for widespread use, embodiments of the present disclosure provide a method for updating user data, the technical solutions are as follows.

According to a first aspect of embodiments of the present disclosure, a method for updating user data is provided. The method comprises the steps of:
acquiring an original character string, which corresponds to a quoted content in user data, in an electronic publication before revision;
recognizing the corresponding original character string in the electronic publication after revision; and
when the recognizing is successful, updating the quoted content in the user data according to a recognizing result to obtain updated user data.

In an embodiment, the step of recognizing the original character string in the electronic publication after revision comprises the steps of :
directly recognizing the original character string in the electronic publication after revision;
or,
segmenting the original character string into n sentences arranged in order, n being a positive integer; and sequentially recognizing the n sentences in the electronic publication after revision;
or,
directly recognizing the original character string in the electronic publication after revision; when the recognizing is not successful, segmenting the original character string into n sentences arranged in order, n being a positive integer; and sequentially recognizing the n sentences in the electronic publication after revision.

In an embodiment, the step of sequentially recognizing the n sentences in the electronic publication after revision comprises the steps of:
recognizing the i^{th} sentence from a searching start position, 1≤i≤n; when i=1, the searching start position being the start position of a chapter where the original character string is located;
when the recognizing of the i^{th} sentence is successful, updating the searching start position to be the end position of a recognized content of the i^{th} sentence, and recognizing the (i+1)^{th} sentence from the updated searching start position, i+1≤n;
when the recognizing of the i^{th} sentence is not successful, recognizing the (i+1)^{th} sentence from a searching position corresponding to the i^{th} sentence; and
after completion of recognizing of all the n sentences, if there exist recognized contents which completely match with the n sentences or if there exist recognized contents which match with the n sentences in part but have a matching degree within a predetermined matching range, determining that the recognizing of the segmented sentences is successful.

In an embodiment, the method further comprises the steps of:
if the earliest successfully recognized sentence among the n sentences is not the 1^{st} sentence, segmenting all the sentences from the 1^{st} sentence to a sentence immediately before the earliest successfully recognized sentence into m word segmentations arranged in order, m being a positive integer;
from the start position of a recognized content of the earliest successfully recognized sentence, recognizing the m word segmentations in reverse order; and
taking the start position of a recognized content of the last successfully recognized word segmentation as a corresponding start position of the original character string in the electronic publication after revision.

In an embodiment, the method further includes the steps of:
if the last successfully recognized sentence among the n sentences is not the n^{th} sentence, segmenting all the sentences from a sentence immediately after the last successfully recognized sentence to the n^{th} sentence into q word segmentations arranged in order, q being a positive integer;
from the end position of a recognized content of the last successfully recognized sentence, sequentially recognizing the q word segmentations; and
taking the end position of a recognized content of the last successfully recognized word segmentation as a corresponding end position of the original character string in the electronic publication after revision.

According to a second aspect of embodiments of the present disclosure, a device for updating user data is provided. The device comprises:
an acquiring module configured to acquire an original character string, which corresponds to a quoted content in user data, in an electronic publication before revision;
a recognizing module configured to recognize the original character string in the electronic publication after revision; and
an updating module configured to, when the recognizing is successful, update the quoted content in the user data according to a recognizing result to obtain updated user data.

In an embodiment, the recognizing module is configured to directly recognize the original character string in the electronic publication after revision;
or,
the recognizing module is configured to segment the original character string into n sentences arranged in order, n being a positive integer; and sequentially recognize the n sentences in the electronic publication after revision;
or,
the recognizing module is configured to directly recognize the original character string in the electronic publication after revision; when the recognizing is not successful, segment the original character string into n sentences arranged in order, n being a positive integer; and sequentially recognize the n sentences in the electronic publication after revision.

In an embodiment, the recognizing module comprises:
a recognizing unit configured to recognize the i^{th} sentence from a searching start position, 1≤i≤n; when i=1, the searching start position being the start position of a chapter where the original character string is located;
a position updating unit configured to, when the recognizing of the i^{th} sentence is successful, update the searching start position to be the end position of a recognized content of the i^{th} sentence, and recognize the (i+1)^{th} sentence from the updated searching start position, i+1 ≤n;
a continued recognizing unit configured to, when the recognizing of the i^{th} sentence is not successful, recognize the (i+1)^{th} sentence from a searching position corresponding to the i^{th} sentence; and
a determining unit configured to, after completion of recognizing of all the n sentences, if there exist recognized contents which completely recognize the n sentences or if there exist recognized contents which recognize the n sentences in part but have a matching degree within a predetermined matching range, determine that the recognizing of the segmented sentences is successful.

In an embodiment, the device further comprises:
a first word segmentation unit configured to, if the earliest successfully recognized sentence among the n sentences is not the 1^{st} sentence, segment all the sentences from the 1^{st} sentence to a sentence immediately before the earliest successfully recognized sentence into m word segmentations arranged in order, m being a positive integer;
a word segmentation recognizing unit configured to, from the start position of a recognized content of the earliest successfully recognized sentence, recognize the m word segmentations in reverse order; and
a start determining unit configured to take the start position of a recognized content of the last successfully recognized word segmentation as a corresponding start position of the original character string in the electronic publication after revision.

In an embodiment, the device comprises:
a second word segmentation unit configured to, if the last successfully recognized sentence among the n sentences is not the n^{th} sentence, segment all the sentences from a sentence immediately after the last successfully recognized sentence to the n^{th} sentence into q word segmentations arranged in order, q being a positive integer;
a word segmentation recognizing unit configured to, from the end position of a recognized content of the last successfully recognized sentence, sequentially recognize the q word segmentations; and
an end determining unit configured to take the end position of a recognized content of the last successfully recognized word segmentation as a corresponding end position of the original character string in the electronic publication after revision.

According to a third aspect of the embodiments of the present disclosure, a device for updating user data is provided. The device comprises:
a processor;
a memory for storing executable instructions by the processor;
wherein the processor is configured to:
acquire an original character string, which corresponds to a quoted content in user data, in an electronic publication before revision;
recognize the original character string in the electronic publication after revision; and
when the recognizing is successful, update the quoted content in the user data according to a recognizing result to obtain updated user data.

A computer program is provided according to a fourth aspect of the present disclosure. The computer program performs the steps of the method for updating user data when this program is executed by a computer.

This program can use any programming language and take the form of source code, object code or a code intermediate between source code and object code, such as a partially compiled form, or any other desirable form.

The invention is also directed to a computer-readable information medium containing instructions of the computer program as described above.

The information medium can be any entity or device capable of storing the program. For example, the support can include storage means such as a ROM, for example a CD ROM or a microelectronic circuit ROM, or magnetic storage means, for example a diskette (floppy disk) or a hard disk.

Alternatively, the information medium can be an integrated circuit in which the program is incorporated, the circuit being adapted to execute the method in question or to be used in its execution.

The technical solutions provided by embodiments of the present disclosure may include the following advantageous effects:

An original character string, which corresponds to a quoted content in user data, in an electronic publication before revision is acquired, the original character string is recognized in the electronic publication after revision; and when the recognizing is successful, the quoted content in the user data is updated according to a recognizing result to obtain updated user data. Using the method for updating user data provided by embodiments of the present disclosure, the computation costs for generating Patch files are saved, and the method for updating user data provided by embodiments of the present disclosure does need separate maintenance and thus may be applied in a large scale.

It is to be understood that both the foregoing general description and the following detailed description are exemplary and explanatory only and are not restrictive of the invention, as claimed.

### BRIEF DESCRIPTION OF THE DRAWINGS

The accompanying drawings, which are incorporated in and constitute a part of this specification, illustrate embodiments consistent with the invention and, together with the description, serve to explain the principles of the invention.
Fig. 1 is a structure diagram of an implementation environment involved in a method for updating user data provided by embodiments of the present disclosure.
Fig. 2 is a flow chart of a method for updating user data according to an exemplary embodiment.
Fig. 3a is a flow chart of a method for updating user data according to another exemplary embodiment.
Fig. 3b is a schematic diagram showing a particular chapter in an electronic publication before revision and a corresponding chapter in the electronic publication after revision according to an embodiment of the present disclosure.
Fig. 3c is a schematic diagram of the translation of the particular chapter of the Fig. 3b.
Fig. 4a is a flow chart of a method for updating user data according to another exemplary embodiment.
Fig. 4b is a schematic diagram showing a particular chapter in an electronic publication before revision and a corresponding chapter in the electronic publication after revision according to an embodiment of the present disclosure.
Fig. 4c is a schematic diagram of the translation of the particular chapter of the Fig. 4b.
Fig. 5a is a flow chart of a method for updating user data according to another exemplary embodiment.
Fig. 5b is a schematic diagram showing a particular chapter in an electronic publication before revision and a corresponding chapter in the electronic publication after revision according to an embodiment of the present disclosure.
Fig. 5c is a schematic diagram of the translation of the particular chapter of the Fig. 5b.
Fig. 6 is a block diagram of a device for updating user data according to an exemplary embodiment.
Fig. 7 is a block diagram of a device for updating user data according to an exemplary embodiment.
Fig. 8 is a block diagram of a device for updating user data according to an exemplary embodiment.

Specific embodiments in this disclosure have been shown by way of example in the foregoing drawings and are hereinafter described in detail. The figures and written description are not intended to limit the scope of the inventive concepts in any manner. Rather, they are provided to illustrate the inventive concepts to a person skilled in the art with reference to particular embodiments.

### DESCRIPTION OF THE EMBODIMENTS

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the invention. Instead, they are merely examples of devices and methods consistent with aspects associated to the invention as recited in the appended claims.

Before detailed explanation and description to embodiments of the present disclosure, user data involved in the present disclosure is explained firstly. In the embodiments of the present disclosure, the user data includes quoted contents and user reading information with respect to the quoted contents. The user data may be any one of a bookmark, a digest and an annotation.

For example, a bookmark may be "the 120,305^{th} character, the 3^{rd} bookmark", the quoted content "the 120,305^{th} character" is used for indicating that a user's reading has arrived at a position of the 120,305^{th} character last time, and user reading information "the 3^{rd} bookmark" is used for indicating that this is the 3^{rd} bookmark in the book.

As another example, a digest may be "the 120,305^{th} character, total of 32 characters, the 1^{st} digest", the quoted content "the 120,305^{th} character, total of 32 characters" is used for indicating that the user data starts from the position of the 120,305^{th} character and has a length of 32 characters, and the user reading information "the 1^{st} digest" is used for indicating that this is the 1^{st} digest in the book; or, the quoted content may also be "the 120,305^{th} character, the 120,337^{th} character", which indicates that the user data starts from the position of the 120,305^{th} character and ends at the position of the 120,337^{th} character.

As still another example, an annotation may be "the 120,305^{th} character, total of 32 characters, this paragraph writes so well". The quoted content "the 120,305^{th} character, total of 32 characters" is used for indicating that the quoted content, for which this annotation is created, starts from the position of the 120,305^{th} character and has a length of 32 characters, and the user reading information "this paragraph writes so well" is the annotation content created by the user for the quoted content; or, the quoted content may also be "the 120,305^{th} character, the 120,337^{th} character", which indicates that the quoted content, for which the annotation is created, starts from the position of the 120,305^{th} character and ends at the position of the 120,337^{th} character.

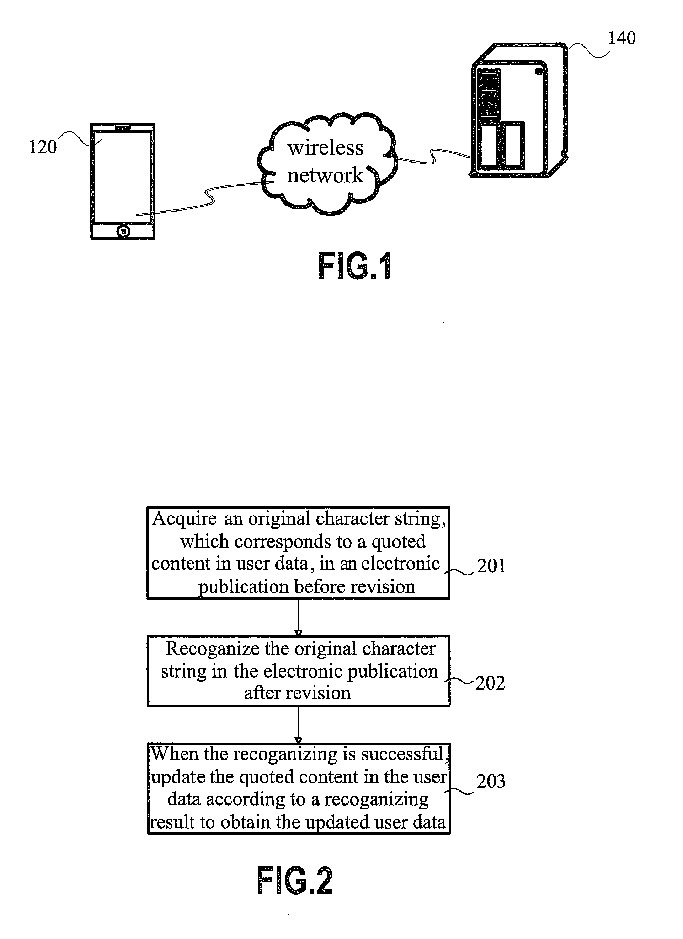

Fig. 1 is a structure diagram of an implementation environment involved in a method for updating user data provided by embodiments of the present disclosure. The implementation environment includes at least one terminal 120 and at least one server 140.

The terminal 120 may be an electronic equipment having reading function. The electronic equipment may be smart phones, tablet PCs, smart TVs or e-book readers and so on.

The terminal 120 may be connected with the server 140 by wireless network.

The server 140 may be a server or a server cluster consisting of a number of servers, or a cloud computing service center. The server 140 may be a server which provides user data updating service to the terminal 120.

Fig. 2 is a flow chart of a method for updating user data according to an exemplary embodiment. Referring to Fig. 2, the present embodiment is described by taking an example where the method is applied in the terminal as shown in Fig. 1. The process of the method includes the following steps.

In step 201, an original character string, which corresponds to a quoted content in user data, in an electronic publication before revision is acquired.

In step 202, the original character string is recognized in the electronic publication after revision.

In step 203, when the recognizing is successful, the quoted content in the user data is updated according to a recognizing result to obtain the updated user data.

In the method for updating user data provided by embodiments of the present disclosure, an original character string, which corresponds to a quoted content in user data, in an electronic publication before revision is acquired, the original character string is recognized in the electronic publication after revision; and when the recognizing is successful, the quoted content in the user data is updated according to a recognizing result to obtain updated user data. Using the method for updating user data provided by embodiments of the present disclosure, the computation costs for generating Patch files are saved, and the method for updating user data provided by embodiments of the present disclosure does need separate maintenance and thus may be applied in a large scale.

The above step 202 has three implementation manners.

First, direct recognizing:

The original character string is directly recognized in the electronic publication after revision.

Second, sentence segmentation recognizing:

The original character string is segmented into n sentences arranged in order, n is a positive integer, and the n sentences are sequentially recognized in the electronic publication after revision.

Third, a combination of direct recognizing and sentence segmentation recognizing:

The original character string is directly recognized in the electronic publication after revision; when the recognizing is not successful, the original character string is segmented into n sentences arranged in order, n is a positive integer; and the n sentences are sequentially recognized in the electronic publication before revision.

The above three implementation manners will be explained in three different embodiments below.

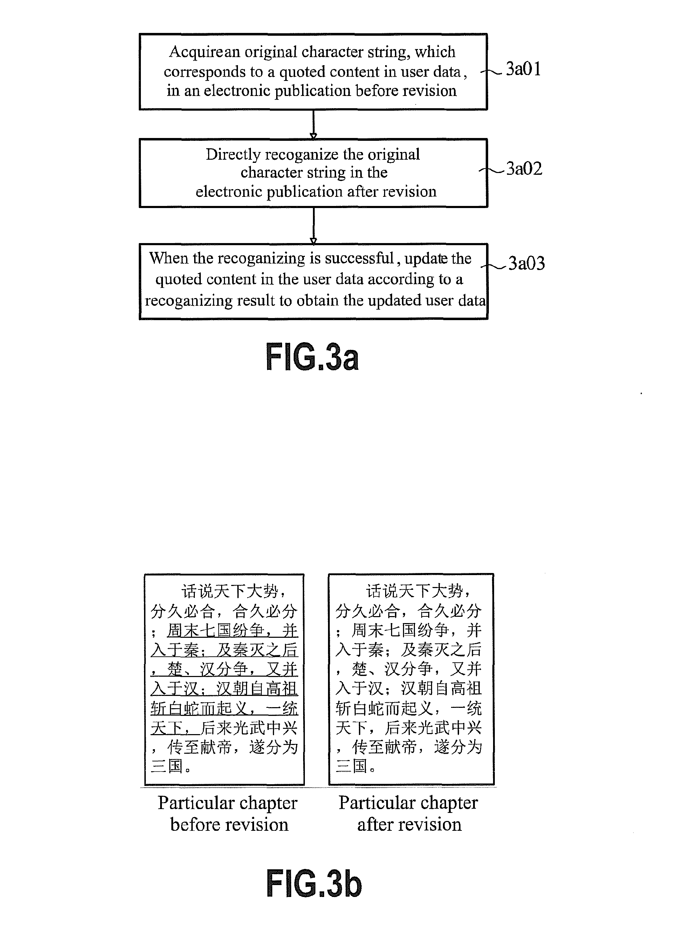

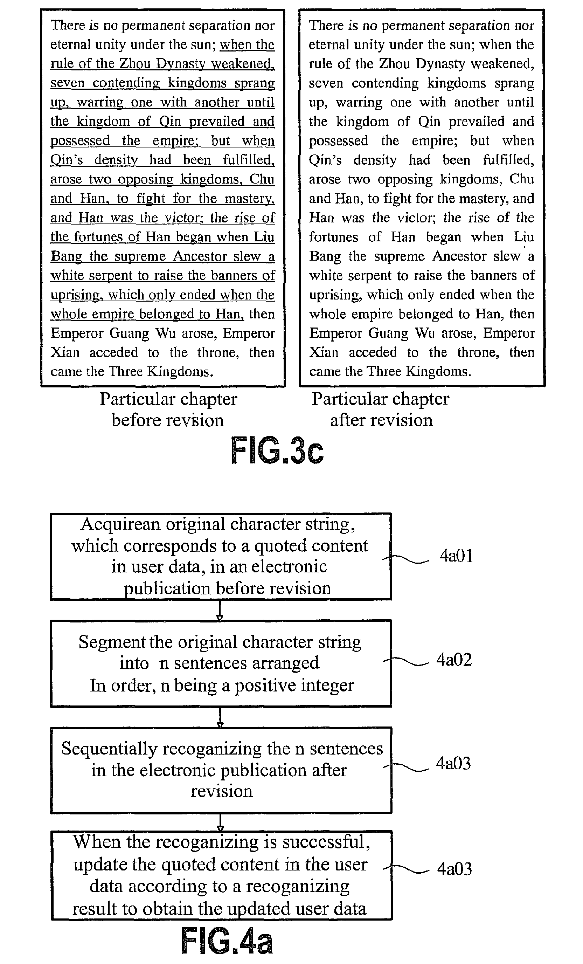

Fig. 3a is a flow chart of a method for updating user data according to another exemplary embodiment. Referring to Fig. 3a, the present embodiment is described by taking an example where the method is applied in terminal as shown in Fig. 1 and the terminal employs the direct matching. The process of the method includes the following steps.

In step 3a01, an original character string, which corresponds to a quoted content in user data, in an electronic publication before revision is acquired.

In the present embodiment, the original character string corresponding to the quoted content in the user data acquired by the terminal may be an original character string corresponding to any one of a bookmark, a digest or an annotation.

In the present embodiment, there are the following two acquiring ways for the terminal to acquire an original character string, which corresponds to a quoted content in user data, in an electronic publication before revision:

First way: the terminal acquires the original character string according to the start position and a length of the quoted content.

For example, when the quoted content is "the 120,305^{th} character, total of 32 characters", the terminal acquires, from the position of the 120,305^{th} character in the current chapter, a character string with a length of 32 characters after the 120,305^{th} character, thereby realizing acquiring of the original character string corresponding to the quoted content.

Second way: the terminal acquires the original character string according to the start position and the end position of the quoted content.

For example, when the quoted content is "the 120,305^{th} character, the 120,337^{th} character", the terminal acquires a character string from the position of the 120,305^{th} character to the position of the 120,337^{th} character in the current chapter, thereby realizing acquiring of the original character string corresponding to the quoted content.

Fig. 3b is a schematic diagram showing a particular chapter in an electronic publication before revision and a corresponding chapter in the electronic publication after revision according to an embodiment of the present disclosure. Referring to Fig. 3b, the original Chinese character string corresponding to the quoted content in the user data acquired by the terminal is " 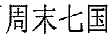 ," ("When the rule of the Zhou Dynasty weakened, seven contending kingdoms sprang up, warring one with another until the kingdom of Qin prevailed and possessed the empire; but when Qin's density had been fulfilled, arose two opposing kingdoms, Chu and Han, to fight for the mastery, and Han was the victor; the rise of the fortunes of Han began when Liu Bang the supreme Ancestor slew a white serpent to raise the banners of uprising, which only ended when the whole empire belonged to Han")

In step 3a02, the original character string is directly recognized in the electronic publication after revision.

When the terminal acquires the original Chinese character string, the terminal searches in the electronic publication after revision, from the start position of a chapter corresponding to a particular chapter of the electronic publication before revision, the original character string in the chapter corresponding to the particular chapter, with the length of the acquired original character string as a searching length, and thus the recognizing of the original character string is achieved.

Referring to Fig. 3b, from the start position " 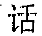 " of the corresponding chapter after revision, with the length of the acquired original Chinese character string as the searching length, the terminal searches the original Chinese character string in the corresponding chapter. The terminal may search out the original Chinese character string " 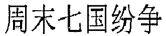 , 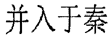 ; 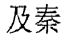
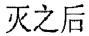 , 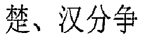 , 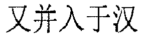 ; 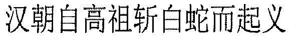 , 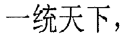 ", and thus the terminal recognizes the original Chinese character string successfully.

In step 3a03, when the recognizing is successful, the quoted content in the user data is updated according to a recognizing result to obtain updated user data.

When the terminal recognizes the original character string successfully, the terminal updates the quoted content of the user data corresponding to the character string according to the position information of the recognized character string to obtain updated user data. The position information may be the start position of the recognized character string in the electronic publication after revision and the end position of the recognized character string in the electronic publication after revision, or, the position information may also be the start position of the recognized character string in the electronic publication after revision and a text length of the recognized character string in the electronic publication after revision.

For example, when the user data is a bookmark, the terminal adds the bookmark at a corresponding position in the electronic publication after revision according to the position of the bookmark; when the user data is a digest, the terminal adds the digest at a corresponding position in the electronic publication after revision according to the start position of the digest and the quoted content corresponding to the digest; when the user data is an annotation, the terminal adds the annotation at a corresponding position in the electronic publication after revision according to the start position of the annotation, the quoted content and the contents of the annotation.

Take the example in step 3a02 as an example, when the terminal successfully recognizes the original Chinese character string " 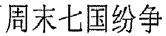 , 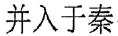 ; 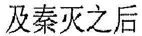 , 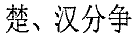 , 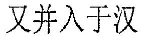 ; 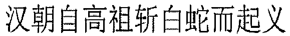 ; 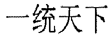 ," and the user data corresponding to the original Chinese character string is "the 120,305^{th} character, total of 32 characters, the 1^{st} digest", the terminal updates the quoted content of the user data corresponding to the Chinese character string in the electronic publication after revision according to the start position of the original Chinese character string and the contents of the original Chinese character string, and the obtained updated user data is "the 120,305^{th} character, total of 32 characters, the 1^{st} digest".

In the method for updating user data provided by embodiments of the present disclosure, an original character string, which corresponds to a quoted content in user data, in an electronic publication before revision is acquired, the original character string is recognized in the electronic publication after revision; and when the recognizing is successful, the quoted content in the user data is updated according to a recognizing result to obtain updated user data. Using the method for updating user data provided by embodiments of the present disclosure, the computation costs for generating Patch files are saved, and the method for updating user data provided by embodiments of the present disclosure does need separate maintenance and thus may be applied in a large scale.

Because the direct recognizing is only applicable in the situation where the original character string is not revised, for a situation where the original character string is revised, recognizing will not be successful. For this reason, the following embodiment is proposed.

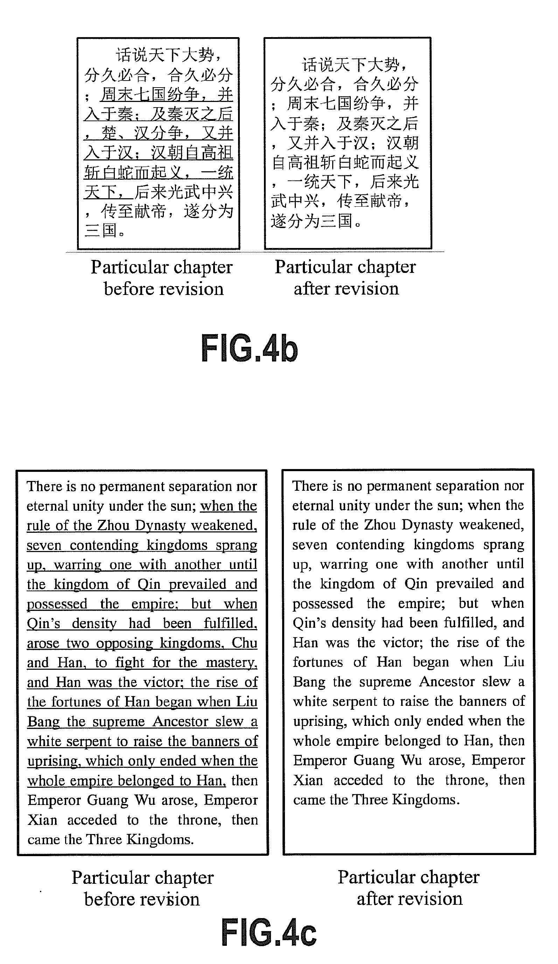

Fig. 4a is a flow chart of a method for updating user data according to another exemplary embodiment. Referring to Fig. 4a, the present embodiment is described taking an example where the method is applied in the terminal as shown in Fig. 1 and the terminal employs the sentence segmentation recognizing. The process of the method includes the following steps.

In step 4a01, the terminal acquires an original character string, which corresponds to a quoted content in user data, in an electronic publication before revision.

Step 4a01 is the same or similar to step 3a01 of the embodiment as shown in Fig. 3a, and thus detailed description of this step will not be provided in this embodiment.

In step 4a02, the terminal segments the original character string into n sentences arranged in order; n is a positive integer.

Taking the original character string of a particular chapter before revision in Fig. 4b as an example, the original Chinese character string acquired by the terminal is " 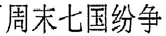 , 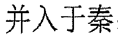 ; 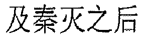 , 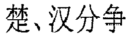 , 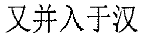 ; 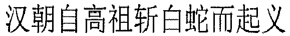 , 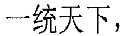 ", and the terminal segments the original Chinese character string into the following seven sentences:(1) " 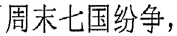 ", (2) " 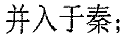 ", (3) " 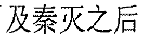 ", (4) " 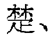 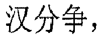 ", (5) " 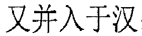 ;", (6) " 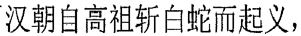 ,", (7) " 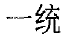 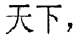 ".

In step 4a03, the terminal sequentially recognizes the n sentences in the electronic publication after revision.

The terminal recognizes the i^{th} sentence from a searching start position in the electronic publication after revision, 1≤i≤n; when i=1, the searching start position is the start position of a chapter where the original character string is located; when the recognizing of the i^{th} sentence is successful, the terminal updates the searching start position to be the end position of a recognized content of the i^{th} sentence, and recognizes the (i+1)^{th} sentence from the updated searching start position, i+1≤n; when the recognizing of the i^{th} sentence is not successful, the terminal recognizes the (i+1)^{th} sentence from a searching position corresponding to the i^{th} sentence.

It shall be noted that, after completion of recognizing of all the n sentences, if there exist recognized contents which completely match with the n sentences or if there exist recognized contents which match with the n sentences in part but have a matching degree within a predetermined matching range, it is determined that the recognizing of the segmented sentences is successful. The predetermined matching range measures the correctness of the recognized sentences for the purposes of preventing a similar but not identical character string being recognized and meanwhile preventing an overlong similar character string being recognized. The predetermined matching range may be expressed by the formula: 80%*Len*1 ≤ *Len*2 ≤ 120%*Len*1, where Len1 is the text length of the original character string, Len2 is the text length of the recognized character string.

Description will be made by taking the seven sentences obtained in the above step 4a02 and the corresponding chapter after revision as shown in Fig. 4b as an example. The terminal takes the start position " 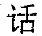 " of the revised corresponding chapter as the searching start position, and sequentially recognizes the above seven sentences in the corresponding chapter after revision. From the start position " 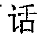 ", with the length of the 1^{st} sentence as the searching length, the terminal searches the 1^{st} sentence in the chapter, and then the terminal may search the 1^{st} sentence out, and thus the terminal recognizes the 1^{st} sentence successfully. The terminal updates the searching start position to be the end position ","of the 1^{st} sentence. From the end position ","of the 1^{st} sentence, with the length of the 2^{nd} sentence as the searching length, the terminal searches the 2^{nd} sentence in the chapter, and then the terminal may also search the 2^{nd} sentence out, and thus the terminal also recognizes the 2^{nd} sentence successfully. The terminal updates the searching start position to be the end position "; "of the 2^{nd} sentence. And then, from the end position"; "of the 2^{nd} sentence, the terminal matches the 3^{rd} sentence, and the terminal may also recognize successfully. The terminal updates the searching start position to be the end position ", "of the 3^{rd} sentence. From the end position ", "of the 3^{rd} sentence, with the length of the 4^{th} sentence as the searching length, the terminal searches the 4^{th} sentence in the chapter until the end position "∘" of the chapter. But, the terminal does not search the 4^{th} sentence out. Thus, the terminal recognizes the 4^{th} sentence unsuccessfully; the terminal does not update the searching start position, but continues to search the 5^{th} sentence in the chapter from the end position ", " of the 3^{rd} sentence, with the length of the 5^{th} sentence as the searching length. Then, the terminal may search the 5^{th} sentence out, and thus the terminal recognizes the 5^{th} sentence successfully. Similarly, the terminal recognizes the 6^{th} and 7^{th} sentences successfully. When the recognizing of the 7^{th} sentence is completed, the recognizing of the sentences in the original character string by the terminal is ended.

In the above recognizing of the seven sentences, the terminal does not recognize the 4^{th} sentence successfully, the recognizing of the original character string belongs to partial recognizing. Consequently, the terminal calculates a relationship between a length of the recognized Chinese character string " 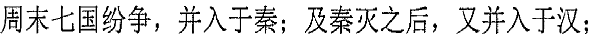 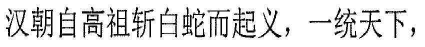 " and the length of the original Chinese character string " 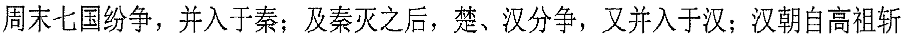 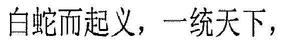 ". The terminal may calculate that the text length of the original Chinese character string is 47 and the text length of the recognized Chinese character string is 41. Because 80% of the text length of the original Chinese character string is 37.5 and 120% of the text length of the original Chinese character string is 56.4, and 37.5<47<56.4, then recognizing of the original Chinese character string by the terminal is successful.

It shall be noted that, in the above example, if the text length of the Chinese character string recognized by the terminal is more than 56.4 or less than 37.5, then the recognizing is unsuccessful. The specific process of the recognizing is similar to the above example, and the detailed descriptions thereof will not be provided here.

In step 4a04, when the recognizing is successful, the terminal updates the quoted content in the user data according to a recognizing result to obtain updated user data.

Step 4a04 is the same or similar to step 3a03 of the embodiment as shown in Fig. 3a, and the detailed descriptions thereof are not provided here.

In the method for updating user data provided by embodiments of the present disclosure, an original character string, which corresponds to a quoted content in user data, in an electronic publication before revision is acquired, the original character string is segmented into n sentences arranged in order, n being a positive integer; and the n sentences are sequentially recognized in the electronic publication after revision, and after the recognizing is successful, the quoted content in the user data is updated according to a recognizing result to obtain updated user data. Using the method for updating user data provided by embodiments of the present disclosure, the computation costs for generating Patch files are saved, and the method for updating user data provided by embodiments of the present disclosure does need separate maintenance and thus may be applied in a large scale.

In the method for updating user data provided by embodiments of the present disclosure, by sentence segmentation recognizing, the effect that the recognizing procedure may be completed even if the original character string changes in sentence level is achieved.

In the method for updating user data provided by embodiments of the present disclosure, by judging the relationship between the matching degree and the predetermined matching range and updating the quoted content in the user data according to the judging result, the correctness of the updated user data is increased.

Because the sentence segmentation is only applicable in the situation where revisions in sentence level occur in the original character string, for a situation where revisions in character level occur in the original character string, the recognizing will not be successful. For this reason, the following embodiment is proposed.

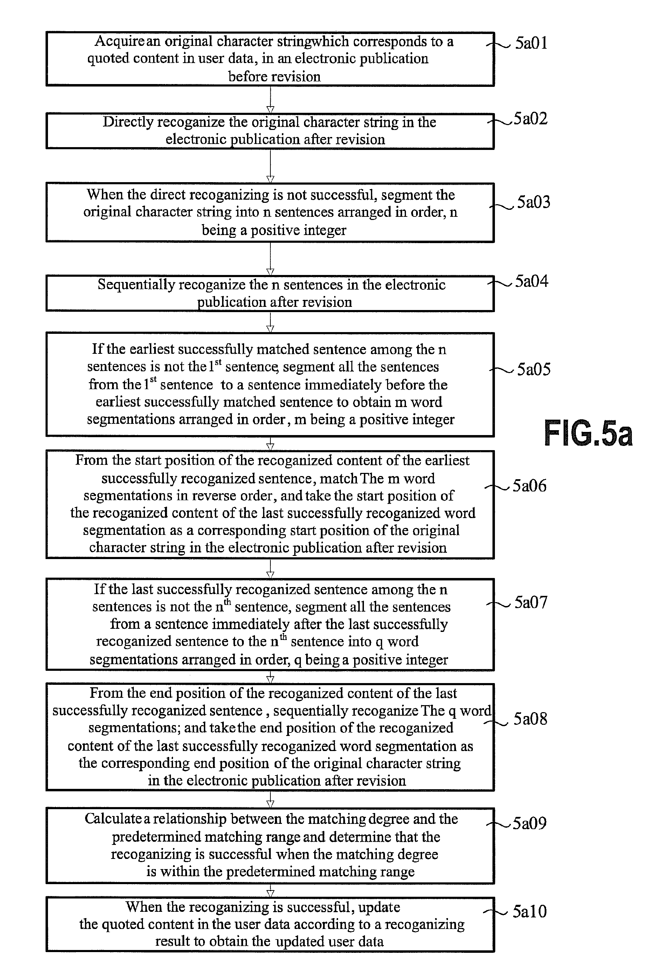

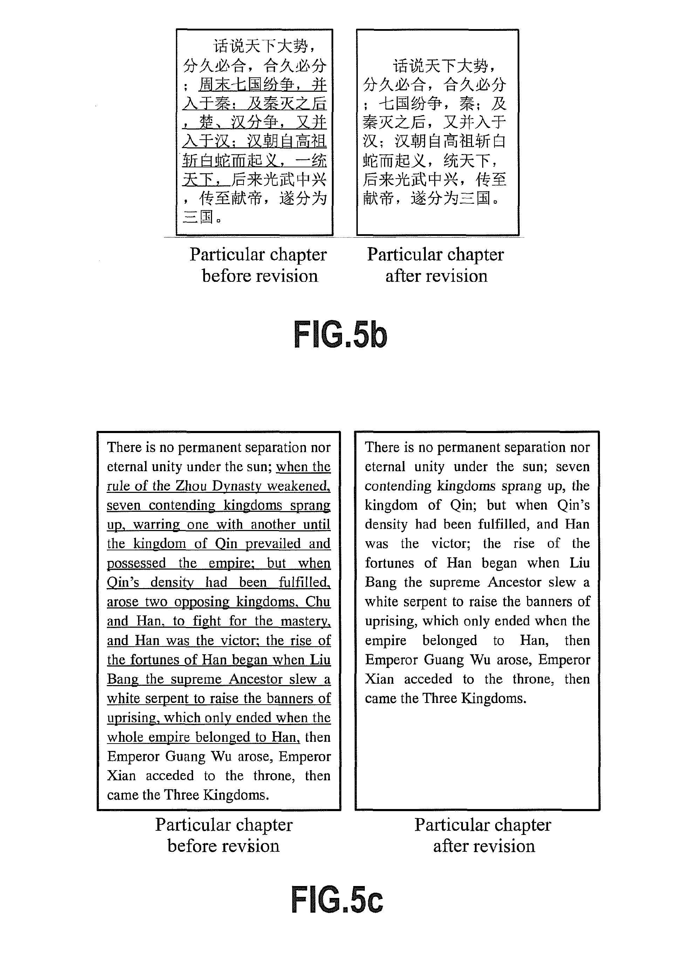

Fig. 5a is a flow chart of a method for updating user data according to another exemplary embodiment. Referring to Fig. 5a, the present embodiment is described taking an example where the method is applied in the terminal as shown in Fig. 1 and the terminal employs a combination of the direct recognizing and the sentence segmentation recognizing, and when the sentence segmentation recognizing is not successful, a word segmentation is also employed. The process of the method includes the following steps.

In step 5a01, an original character string, which corresponds to a quoted content in user data, in an electronic publication before revision is acquired.

Step 5a01 is the same or similar to step 3a01 of the embodiment as shown in Fig. 3a, and the detailed descriptions thereof are not provided here.

In step 5a02, the original character string is directly recognized in the electronic publication after revision.

Fig. 5b is a schematic diagram showing a particular chapter in an electronic publication before revision and the corresponding chapter in the electronic publication after revision according to an embodiment of the present disclosure. Referring to Fig. 5b, the original Chinese character string corresponding to the quoted content in the user data acquired by the terminal is " 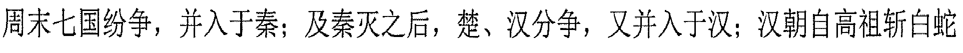 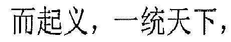 ". Similar to step 3a02 in the embodiment as shown in the Fig. 3a, from the start position " 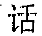 " of the corresponding chapter after revision, with the length of the acquired original Chinese character string as the searching length, the terminal searches the original Chinese character string in the corresponding chapter after revision until the end position "∘" of the chapter. But, the terminal dose not search out the original Chinese character string. Consequently, the direct recognizing of the original Chinese character string by the terminal fails.

In step 5a03, when the direct recognizing is not successful, the original character string is segmented into n sentences arranged in order, and n is a positive integer.

Taking the original character string in the particular chapter before revision in Fig. 5b as an example, the terminal segments the original Chinese character string into the following seven sentences:(1) " 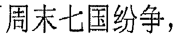 ", (2) " 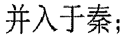 ", (3) " 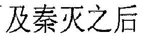 ", (4) " 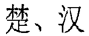 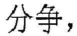 ", (5) " 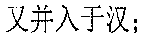 ", (6) " 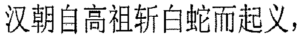 ", (7) " 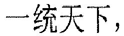 " .

In step 5a04, the n sentences are sequentially recognized in the electronic publication after revision.

The terminal recognizing the i^{th} sentence from a searching start position, 1 ≤i≤n; when i=1, the searching start position is the start position of a chapter where the original character string is located; when the recognizing of the i^{th} sentence is successful, the terminal updates the searching start position to be the end position of a recognized content of the i^{th} sentence, and recognizes the (i+1)^{th} sentence from the updated searching start position, i+1≤n; when the recognizing of the i^{th} sentence is not successful, the terminal recognizes the (i+1)^{th} sentence from a searching position corresponding to the i^{th} sentence.

Description will be made taking the seven sentences obtained in step 5a03 and the corresponding chapter after revision as shown in Fig. 5b as an example. The terminal takes the start position " 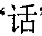 " of the corresponding chapter as the searching start position, and sequentially recognizes the above seven sentences in the corresponding chapter. From the start position " 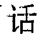 ", with the length of the 1^{st} sentence as the searching length, the terminal searches the 1^{st} sentence in the chapter until the end position" ∘" of the corresponding chapter. But, the terminal does not search the 1^{st} sentence out. Thus, the recognizing of the 1^{st} sentence by the terminal fails. The terminal dose not update the searching start position, but continues to searches the 2^{nd} sentence in the chapter by taking the start position " 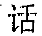 " of the corresponding chapter as the searching start position, with the length of the 2^{nd} sentence as the searching length, until the end position" ∘" of the corresponding chapter. But, the terminal does not search the 2^{nd} sentence out. Thus, the recognizing of the 2^{nd} sentence by the terminal also fails. The terminal dose not update the searching the start position, but continues to searches the 3^{rd} sentence in the corresponding chapter by taking the start position " 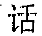 " of the corresponding chapter as the searching start position, with the length of the 3^{rd} sentence as the searching length. The terminal can search the 3^{rd} sentence out, and thus the recognizing of the 3^{rd} sentence by the terminal succeeds. The terminal updates the searching start position to be the end position "," of the 3^{rd} sentence. And then, from the end position "," of the 3^{rd} sentence, the terminal searches the 4^{th} sentence in the chapter, and achieves successful recognizing of the 4^{th} sentence. Similarly, the terminal recognizes the 5^{th} and 6^{th} sentences successfully. When the terminal recognizes the 6^{th} sentence successfully, the terminal updates the searching the start position to be the end position ", " of the 6^{th} sentence, and, from the end position ", " of the 6^{th} sentence, with the length of the 7^{th} sentence as the searching length, the terminal searches the 7^{th} sentence in the corresponding chapter until the end position "∘" of the corresponding chapter. But, the terminal does not search the 7^{th} sentence out. Thus, the recognizing of the 7^{th} sentence by the terminal also fails. At this time, the recognizing of the sentences of the original character string by the terminal is completed.

In step 5a05, if the earliest successfully recognized sentence among the n sentences is not the 1^{st} sentence, all the sentences from the 1^{st} sentence to a sentence immediately before the earliest successfully recognized sentence are segmented into m word segmentations arranged in order, and m is a positive integer.

When the terminal recognizes the sentences in the original character string, if the recognizing of the 1^{st} sentence in the original character string is not successful, then the terminal segments all the sentences from a sentence immediately before the earliest successfully recognized sentence to the 1^{st} sentence of the original character string into m word segmentations, and m is a positive integer.

Description will be made further taking the seven sentences obtained in the above step 5a03 and the recognizing result of the each sentence in step 5a04 as an example. In the above step 5a04, when the terminal recognizes each sentence, the earliest successfully recognized sentence is the 3^{rd} sentence in the original character string. That is to say, the sentence that is firstly recognized by the terminal is: " 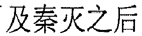 ,", i.e. the terminal does not recognize the 1^{st} and 2^{nd} sentences in the original Chinese character string successfully. Then, the terminal segments all the sentences from a sentence immediately before the earliest successfully recognized sentence " 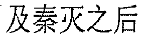 ," to the 1^{st} sentence in the original Chinese character string " 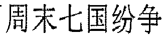 ," into word segmentations. That is to say, the terminal segments the 1^{st} and 2^{nd} sentences in the original Chinese character string into word segmentations.

The 1^{st} and 2^{nd} sentences in the original Chinese character string are: (1) " 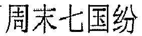 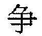 , " and (2) " 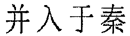 ;". The terminal segments the two sentences into word segmentations to obtain six word segmentations arranged in order: " 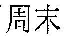 ", " 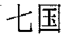 ", " 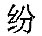 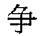 ", " 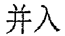 ", " 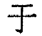 ", " 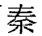 ".

In step 5a06, from the start position of the recognized content of the earliest successfully recognized sentence, the m word segmentations are recognized in reverse order,; and the start position of the recognized content of the last successfully recognized word segmentation is taken as a corresponding start position of the original character string in the electronic publication after revision.

From the start position of the recognized content of the earliest successfully recognized sentence, the terminal recognizes the m word segmentations in reverse order, i.e., the terminal recognizes the last word segmentation firstly, and then recognizes the penult word segmentation, and so on, and the terminal recognizes the first word segmentation finally.

It shall be noted that, when the terminal recognizes the m word segmentations, the terminal recognizes the m word segmentations in the content before the earliest successfully recognized sentence in the chapter.

It shall be further noted that, after completion of recognizing of all the m sentences, if there exist recognized contents which completely match with the m word segmentations or if there exist recognized contents which match with the m sentences in part but have a matching degree within a first predetermined matching range, it is determined that the recognizing of the word segmentations is successful. The terminal takes the position of the last successfully recognized word segmentation as a corresponding start position of the original character string in the electronic publication after revision. When the match degree is within the first predetermined matching range, it is determined that the recognizing of the word segmentations fails. The terminal takes the position of the first successfully recognized sentence as the corresponding start position of the original character string in the electronic publication after revision. The first predetermined matching degree may be: *m*1 ≥ 50%*m,* m is the same as the m in step 5a05, i.e. m represents the number of the obtained word segmentations by segmenting all the sentences from a sentence immediately before the earliest successfully recognized sentence to the 1^{st} sentence of the original character string, and m1 represents the number of the recognized word segmentations.

Description will be made taking the six word segmentations obtained in the above step 5a05 and the corresponding chapter after revision as shown in Fig. 5b as an example. When performing recognizing of the segmented sentences, the earliest successfully recognized sentence by the terminal is " 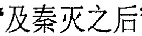 ", the terminal takes the start position " 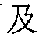 " of " 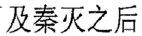 " as the searching start position, and recognizes the six word segmentations in reverse order in the contents before the earliest successfully recognized sentence in the chapter.

Taking " 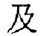 " as the searching start position, the terminal searches the last word segmentation " 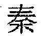 " in reverse order in the contents before " 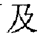 " in the corresponding chapter until the position " 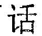 ". But, the terminal does not search the word segmentation " 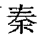 " out. Thus, the recognizing of the word segmentation " 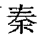 " by the terminal fails. The terminal dose not update the searching start position and continues to take " 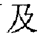 " as the searching start position to search the penult word segmentation " 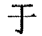 " in reversed order in the contents before " 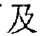 " in the corresponding chapter. The terminal finds that the recognizing of the word segmentation " 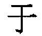 " also fails, and then the terminal continues to recognize the word segmentation " 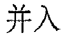 " in reverse order from the position of " 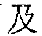 ". The recognizing result is also a failure. The terminal dose not update the searching start position and searches the word segmentation " 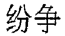 " in reverse order from the position " 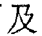 ". The terminal can search out " 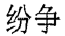 " at the current searching position, and thus the terminal recognizes " 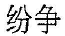 " successfully. And then, the terminal updates the searching start position as " 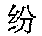 " and searches the word segmentation " 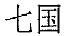 " in reverse order from the position " 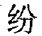 " . The recognizing result is successful. The terminal updates the searching start position as " 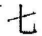 " and searches the word segmentation " 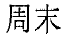 " in reverse order from the position of " 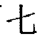 ". The recognizing result is a failure. The recognizing ends.

During the recognizing of the six word segmentations, a part of the word segmentations are recognized successfully, and therefore this belongs to the partial recognizing. The terminal calculates a relationship between the matching degree and the first predetermined matching range. The terminal can calculate that there are six word segmentations participating in the recognizing, and there are two word segmentations which are recognized successfully. 50% of the word segmentations participating in the recognizing is 3, and 2<3, and thus the word segmentation recognizing fails. The terminal does not update the corresponding start position of the original character string in the electronic publication after revision, that is to say, the terminal takes " 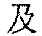 " as the corresponding start position of the original Chinese character string in the electronic publication after revision.

It shall be noted that, if the calculated number of the word segmentations which are successfully recognized is greater than or equal to 3, the word segmentation recognizing succeeds. Under such condition, the terminal needs to update the start position of the original character string in the electronic publication to be the position of the last successfully recognized word segmentation.

In step 5a07, if the last successfully recognized sentence among the n sentences is not the n^{th} sentence, all the sentences from a sentence immediately after the last successfully recognized sentence to the n^{th} sentence are segmented into q word segmentations arranged in order, and q is a positive integer.

When the terminal performing recognizing of the sentences in the original character string, if the last successfully recognized sentence in the original character string is not the n^{th} sentence, then the terminals segments all the sentences from a sentence immediately after the last successfully recognized sentence to the n^{th} sentence into q word segmentations arranged in order, and q is a positive integer.

Description will be made further taking the seven sentences obtained in the step 5a03 and the recognizing result of each sentence segmentation in step 5a04 as an example. In the above step 5a04, when the terminal performs recognizing of each sentence, the last successfully recognized sentence is the 6^{th} sentence in the original character string. That is to say, the last successfully recognized sentence by the terminal is: " 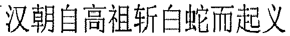 , ", i.e. the terminal does not recognize the 7^{th} sentence in the original Chinese character string successfully. Then the terminal segments all the sentences from a sentence immediately after the last successfully recognized sentence " 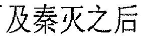 ," to the last sentence in the original Chinese character string " 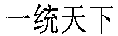 ,". That is to say, the terminal segments the 7^{th} sentence in the original Chinese character string.

The 7^{th} sentence in the original Chinese character string is: (7) " 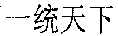 ,". The terminal segments the sentence to obtain three word segmentations arranged in order: " 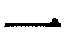 ", " 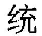 ", " 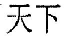 ".

In step 5a08, from the end position of the recognized content of the last successfully recognized sentence, the q word segmentations are sequentially recognized; and the end position of the recognized content of the last successfully recognized word segmentation is taken as the corresponding end position of the original character string in the electronic publication after revision.

From the end position of the recognized content of the last successfully recognized sentence, the terminal sequentially recognizes the q word segmentations.

It shall be noted that, when the terminal performs recognizing of the q word segmentations, the terminal recognizes the q word segmentations in the contents after the last successfully recognized sentence in the chapter.

It shall be further noted that, after completion of recognizing of all the q word segmentations, if there exist recognized contents which completely match with the q word segmentations or if there exist recognized contents which match with the q sentences in part but have a matching degree within a first predetermined matching range, it is determined that the recognizing of the word segmentations is successful. The terminal takes the position of the last successfully recognized word segmentation as the corresponding end position of the original character string in the electronic publication after revision. When the matching degree is not within the first determined matching range, it is determined that the word segmentation recognizing fails. The terminal takes the position of the last successfully recognized sentence as the corresponding end position of the original character string in the electronic publication after revision. The first predetermined matching range may be: *q*1 ≥ 50%*q*, where q is the same as the q in step 5a07, i.e. q represents the number of the obtained word segmentations by segmenting all the sentences from a sentence immediately after the last successfully recognized sentence to the n^{th} sentence, and q1 represents the number of the recognized word segmentations.

Description will be made taking the three word segmentations obtained from the above step 5a07 and the corresponding chapter after revision as shown in Fig. 5b. When performing recognizing of sentence segmentations, the last sentence successfully recognized by the terminal is " 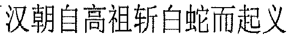 ,, the terminal takes the end position "," of " 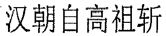 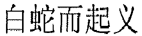 ," as the searching start position, and sequentially recognizes the three word segmentations in the contents after the last successfully recognized sentence in the chapter.

Taking "," as the searching start position, the terminal searches the first word segmentation " 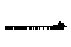 " in the contents after "," in the corresponding chapter until the position"∘". But, the terminal does not search the word segmentation " 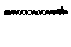 " out. Thus, the recognizing of the word segmentation " 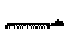 " by the terminal fails. The terminal dose not update the searching start position and continues to take "," as the searching start position to sequentially search the second word segmentation " 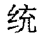 " in the contents after "," in the corresponding chapter. The terminal can search " 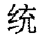 " out at the current searching position. Thus, the recognizing of " 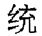 " by the terminal is successful. And then the terminal updates the searching start position as " 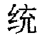 " and sequentially performs recognizing of the word segmentation " 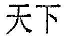 " from the position " 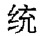 ". The recognizing succeeds. Then, the recognizing ends.

During recognizing of the three word segmentations, a part of the word segmentations are not recognized successfully, and therefore this belongs to the partial recognizing. The terminal calculates a relationship between the matching degree and the first predetermined matching range. The terminal can calculate that there are three word segmentations participating in the recognizing, and there are two word segmentations which are recognized successfully. 50% of the word segmentations participating in the recognizing is 1.5, and 2>1.5, and thus the word segmentation recognizing succeeds. The terminal takes the end position of " 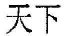 " as the corresponding end position of the original character string in the electronic publication after revision.

It shall be noted that, if the calculated number of the word segmentations which are successfully recognized is smaller than 1.5, the word segmentation recognizing fails. Under such condition, the terminal does not update the corresponding end position of the original character string in the electronic publication after revision, i.e. the terminal takes "," as the corresponding end position of the original character string in the electronic publication after revision.

In step 5a09, the relationship between the matching degree and the predetermined matching range is calculated. When the matching degree is within the predetermined matching range, it is determined that the recognizing is successful.

After completion of the above steps 5a01-5a08, the terminal calculates the corresponding relationship between the matching degree and the predetermined matching range. When the matching range is within the predetermined matching range, it is determined the recognizing of the original character string is successful. The predetermined matching range may be expressed by the formula: 80% *Len*1≤ *Len*2 ≤ 120%*Len*1*,* where Len1 is the text length of the original character string, and Len2 is the text length of the recognized character string.

Description will be made taking the original Chinese character string in the above steps 5a01-5a08 and the recognizing result of the original Chinese character string as an example. The original Chinese character string is " 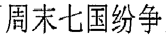 , 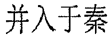 , 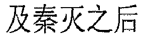 , 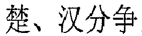 , 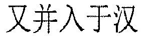 ; 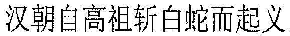 , 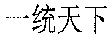 ,", and the recognized Chinese character stringis " 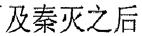 , 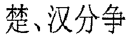 , 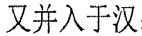 ; 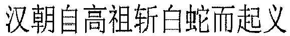 , 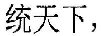 ". The terminal may calculate that, the text length of the original Chinese character string is 47 and the text length of the recognized Chinese character string is 41. Because 80% of the text length of the original Chinese character string is 37.5 and 120% of the text length of the original character string is 56.4 and 34<37.5<56.4, the recognizing of the original character string by the terminal fails.

It shall be noted that, in the above example, if the text length of the character string recognized by the terminal is between 37.5 and 56.4, then the recognizing is successful under such condition. The specific process of the recognizing is similar to the above example, and thus the detailed descriptions thereof are not provided here.

In step 5a10, if the recognizing is successful, the quoted content in the user data is updated according to a recognizing result to obtain the updated user data.

Step 5a10 is the same or similar to step 3a03 of the embodiment as shown in Fig. 3a, and thus the detailed descriptions there are not provided in this embodiment.

In the method for updating user data provided by embodiments of the present disclosure, an original character string, which corresponds to a quoted content in user data, in an electronic publication before revision is acquired, the original character string is recognized in the electronic publication after revision; and when the recognizing is not successful, the original character string is segmented to obtain n sentences arranged in order, and the n sentences are sequentially recognized in the electronic publication after revision; and when the earliest successfully recognized sentence is not the 1^{st} sentence and/or the last successfully recognized sentence is not the last sentence in the original character string, the sentences from a sentence immediately before the earliest successfully recognized sentence to the 1^{st} sentence and the sentences from a sentence immediately after the last successfully recognized sentence to the last sentence in the original character string are segmented. Each word segmentation is recognized in the corresponding chapter after revision. The user data corresponding to the original character string is updated according to the recognizing result. Thus, the computation costs for generating Patch files are saved, and the method for updating user data may be applied in a large scale. Further, by defining a relationship between the matching degree of the word segmentation and the predetermined matching range, the correctness of the updated user data is improved and the improvement of the method for updating user data may be guaranteed.

It shall be note that, in the embodiments in above Figs. 2-5, the execution body for updating the quoted content of the user data is a terminal. However, in fact, in other embodiments provided by the present disclosure, the execution body for updating the quoted content of the user data may also be a server, and the terminal may download the updated quoted content of the user data from the server.

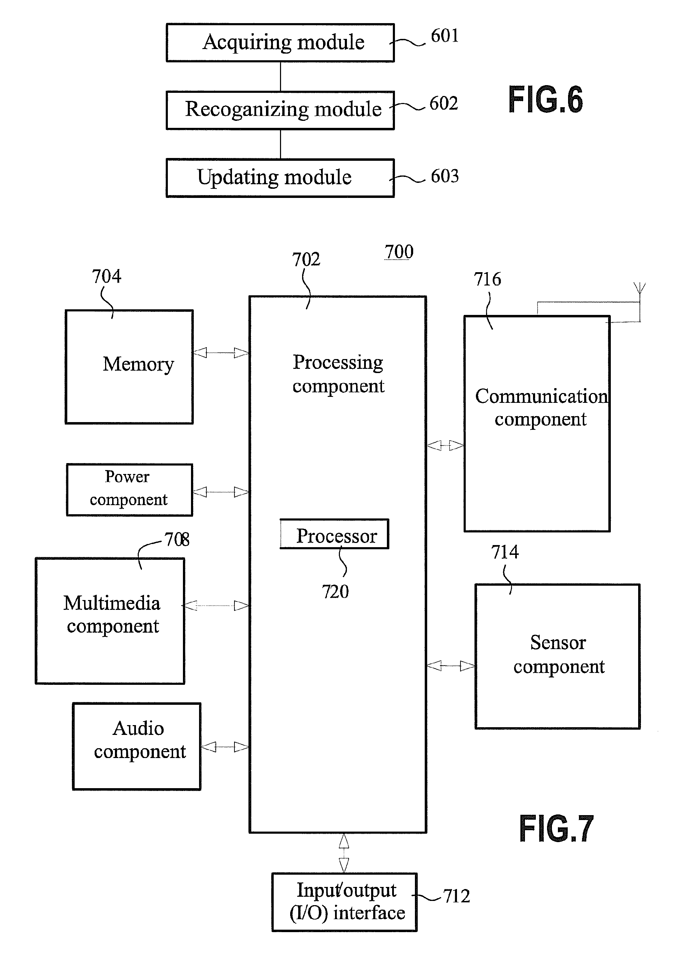

Fig. 6 is a block diagram of a device for updating user data according to an exemplary embodiment. The device for updating user data may be achieved by software, hardware or the combination thereof to be part or whole of a DLAN server. The device for updating user data may include an acquiring module 601, a recognizing module 602 and an updating module 603.

The acquiring module 601 is configured to acquire an original character string, which corresponds to a quoted content in user data, in an electronic publication before revision; the acquiring module 601 is connected with the recognizing module 602. The recognizing module 602 is configured to recogniz the original character string in the electronic publication after revision; the recognizing module 602 is connected with the updating module 603, and the updating module 603 is configured to, when the recognizing is successful, update the quoted content in the user data according to a recognizing result to obtain updated user data.

In an embodiment, the recognizing module 603 is configured to directly recognize the original character string in the electronic publication after revision;
or,
the recognizing module 603 is configured to segment the original character string into n sentences arranged in order, n being a positive integer; and sequentially recognize the n sentences in the electronic publication after revision;
or,
the recognizing module 603 is configured to directly recognize the original character string in the electronic publication after revision; when the recognizing is not successful, segment the original character string into n sentences arranged in order, n being a positive integer; and sequentially recognize the n sentences in the electronic publication after revision.

In an embodiment, the recognizing module 603 includes:
a recognizing unit configured to recognize the i^{th} sentence from a searching start position, 1≤i≤n; when i=1, the searching start position being the start position of a chapter where the original character string is located;
a position updating unit configured to when the recognizing of the i^{th} sentence is successful, update the searching start position to be the end position of a recognized content of the i^{th} sentence, and recognize the (i+1)^{th} sentence from the updated searching start position, i+1 ≤n;
a continued recognizing unit configured to, when the recognizing of the i^{th} sentence is not successful, recognize the (i+1)^{th} sentence from a searching position corresponding to the i^{th} sentence; and
a determining unit configured to, after completion of recognizing of all the n sentences, if there exist recognized contents which completely match with the n sentences or if there exist recognized contents which match with the n sentences in part but have a matching degree within a predetermined matching range, determine that the recognizing of the segmented sentences is successful.

In an embodiment, the device further includes:
a first word segmentation unit configured to, if the earliest successfully recognized sentence among the n sentences is not the 1^{st} sentence, segment all the sentences from the 1^{st} sentence to a sentence immediately before the earliest successfully recognized sentence into m word segmentations arranged in order, m being a positive integer;
a word segmentation recognizing unit configured to, from the start position of a recognized content of the earliest successfully recognized sentence, recognize the m word segmentations in reverse order; and
a start determining unit configured to take the start position of a recognized content of the last successfully recognized word segmentation as a corresponding start position of the original character string in the electronic publication after revision.

In an embodiment, the device further includes:
a second word segmentation unit configured to, if the last successfully recognized sentence among the n sentences is not the n^{th} sentence, segment all the sentences from a sentence immediately after the last successfully recognized sentence to the n^{th} sentence into q word segmentations arranged in order, q being a positive integer;
a word segmentation recognizing unit configured to, from the end position of a recognized content of the last successfully recognized sentence, sequentially recognize the q word segmentations; and
an end determining unit configured to take the end position of a recognized content of the last successfully recognized word segmentation as a corresponding end position of the original character string in the electronic publication after revision.

In the device for updating user data provided by embodiments of the present disclosure, an original character string, which corresponds to a quoted content in user data, in an electronic publication before revision is acquired, the original character string is recognized in the electronic publication after revision; and when the recognizing is successful, the quoted content in the user data is updated according to a recognizing result to obtain updated user data. Using the device for updating user data provided by embodiments of the present disclosure, the computation costs for generating Patch files are saved, and the device for updating user data provided by embodiments of the present disclosure does need separate maintenance and thus may be applied in a large scale.

As for the device in the above embodiments, the specific implementations for respective modules to perform operations have been described in detail in the embodiments regarding methods, and thus the detailed descriptions thereof will not be provided here.

Fig. 7 is a block diagram of a device 700 for updating user data according to an exemplary embodiment. For example, the device 700 may be a mobile phone, a computer, a digital broadcast terminal, a messaging device, a gaming console, a tablet, a medical device, exercise equipment, a personal digital assistant, and the like.

Referring to Fig. 7, the device 700 may include one or more of the following components: a processing component 702, a memory 704, a power component 706, a multimedia component 708, an audio component 710, an input/output (I/O) interface 712, a sensor component 714, and a communication component 716.

The processing component 702 typically controls overall operations of the device 700, such as the operations associated with display, telephone calls, data communications, camera operations, and recording operations. The processing component 702 may include one or more processors 720 to execute instructions to perform all or part of the steps in the above described methods. Moreover, the processing component 702 may include one or more modules which facilitate the interaction between the processing component 702 and other components. For instance, the processing component 702 may include a multimedia module to facilitate the interaction between the multimedia component 708 and the processing component 702.

The memory 704 is configured to store various types of data to support the operation of the device 700. Examples of such data include instructions for any applications or methods operated on the device 700, contact data, phonebook data, messages, pictures, video, etc. The memory 704 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 706 provides power to various components of the device 700. The power component 706 may include a power management system, one or more power sources, and any other components associated with the generation, management, and distribution of power in the device 700.

The multimedia component 708 includes a screen providing an output interface between the device 700 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 708 includes a front camera and/or a rear camera. The front camera and the rear camera may receive an external multimedia datum while the device 700 is in an operation mode, such as a photographing mode or a video mode. Each of the front camera and the rear camera may be a fixed optical lens system or have focus and optical zoom capability.

The audio component 710 is configured to output and/or input audio signals. For example, the audio component 710 includes a microphone (MIC) configured to receive an external audio signal when the device 700 is in an operation mode, such as a call mode, a recording mode, and a voice recognition mode. The received audio signal may be further stored in the memory 704 or transmitted via the communication component 716. In some embodiments, the audio component 710 further includes a speaker to output audio signals.

The I/O interface 712 provides an interface between the processing component 702 and peripheral interface modules, such as a keyboard, a click wheel, buttons, and the like. The buttons may include, but are not limited to, a home button, a volume button, a starting button, and a locking button.

The sensor component 714 includes one or more sensors to provide status assessments of various aspects of the device 700. For instance, the sensor component 714 may detect an open/closed status of the device 700, relative positioning of components, e.g., the display and the keypad, of the device 700, a change in position of the device 700 or a component of the device 700, a presence or absence of user contact with the device 700, an orientation or an acceleration/deceleration of the device 700, and a change in temperature of the device 700. The sensor component 714 may include a proximity sensor configured to detect the presence of nearby objects without any physical contact. The sensor component 714 may also include a light sensor, such as a CMOS or CCD image sensor, for use in imaging applications. In some embodiments, the sensor component 714 may also include an accelerometer sensor, a gyroscope sensor, a magnetic sensor, a pressure sensor, or a temperature sensor.

The communication component 716 is configured to facilitate communication, wired or wirelessly, between the device 700 and other devices. The device 700 can access a wireless network based on a communication standard, such as WiFi, 2G, or 3G, or a combination thereof. In one exemplary embodiment, the communication component 716 receives a broadcast signal or broadcast associated information from an external broadcast management system via a broadcast channel. In one exemplary embodiment, the communication component 716 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the device 700 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In exemplary embodiments, there is also provided a non-transitory computer-readable storage medium including instructions, such as included in the memory 704, executable by the processor 720 in the device 700, for performing the above-described methods. For example, the non-transitory computer-readable storage medium may be a ROM, a RAM, a CD-ROM, a magnetic tape, a floppy disc, an optical data storage device, and the like.

A non-transitory computer-readable storage medium having stored therein instructions that, when executed by a processor of a device 700, causes the device 700 to perform the above method for updating user data.

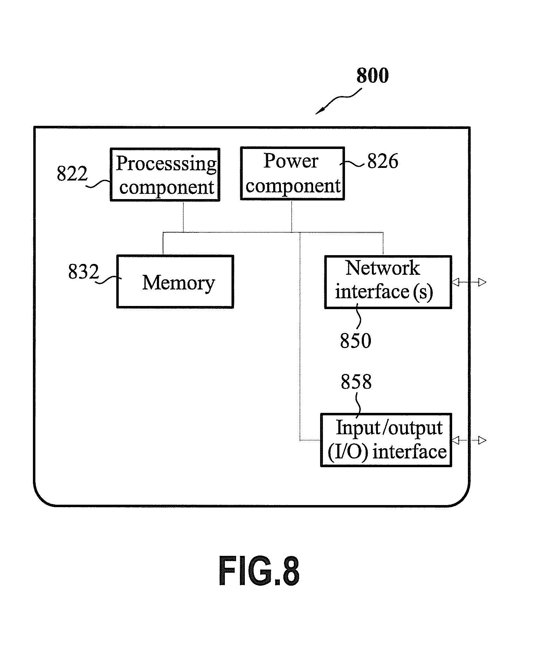

FIG. 8 is a block diagram of a device 800 for updating user data according to an exemplary embodiment. For example, the device 800 may be provided as a server. Referring to FIG. 8, the device 800 includes a processing component 822 that further includes one or more processors, and memory resources represented by a memory 832 for storing instructions executable by the processing component 822, such as application programs. The application programs stored in the memory 832 may include one or more modules each corresponding to a set of instructions. Further, the processing component 822 is configured to execute the instructions to perform the above described method for updating user data.

The device 800 may also include a power component 826 configured to perform power management of the device 800, wired or wireless network interface(s) 850 configured to connect the device 800 to a network, and an input/output (I/O) interface 858. The device 800 may operate based on an operating system stored in the memory 832, such as Windows ServerTM, Mac OS XTM, UnixTM, LinuxTM, FreeBSDTM, or the like.

Other embodiments of the invention will be apparent to those skilled in the art from consideration of the specification and practice of the invention disclosed here. This application is intended to cover any variations, uses, or adaptations of the invention following the general principles thereof and including such departures from the present disclosure as come within known or customary practice in the art. It is intended that the specification and examples be considered as exemplary only, with a true scope and spirit of the invention being indicated by the following claims.

It will be appreciated that the present invention is not limited to the exact construction that has been described above and illustrated in the accompanying drawings, and that various modifications and changes can be made without departing from the scope thereof. It is intended that the scope of the invention only be limited by the appended claims.

## Claims

1. A method for updating user data, **characterized in that**, the method comprises the steps of:
acquiring (201, 3a01, 4a01, 5a01) an original character string, which corresponds to a quoted content in user data, in an electronic publication before revision;
recognizing (202) the original character string in the electronic publication after revision; and
when the recognizing is successful, updating (203, 3a03, 4a04, 5a10) the quoted content in the user data according to a recognizing result to obtain updated user data.

2. The method according to claim 1, **characterized in that**, the step (202) of matching the original character string in the electronic publication after revision comprises the steps of:
directly recognizing (3a02) the original character string in the electronic publication after revision;
or,
segmenting (4a02) the original character string into n sentences arranged in order, n being a positive integer; and sequentially recognizing (4a03) the n sentences in the electronic publication after revision;
or,
directly recognizing (5a02) the original character string in the electronic publication after revision; when the matching is not successful, segmenting (5a03) the original character string into n sentences arranged in order, n being a positive integer; and sequentially recognizing (5a04) the n sentences in the electronic publication after revision.

3. The method according to claim 2, **characterized in that**, the step of sequentially recognizing (4a03, 5a03) the n sentences in the electronic publication after revision comprises the steps of:
recognizing the i^{th} sentence from a searching start position, 1≤i≤n; when i=1, the searching start position being the start position of a chapter where the original character string is located;
when the recognizing of the i^{th} sentence is successful, updating the searching start position to be the end position of a recognized content of the i^{th} sentence, and recognizing the (i+1)th sentence from the updated searching start position, i+1 ≤n;
when the recognizing of the i^{th} sentence is not successful, recognizing the (i+1)^{th} sentence from a searching position corresponding to the i^{th} sentence; and
after completion of recognizing of all the n sentences, if there exist recognized contents which completely match with the n sentences or if there exist recognized contents which match with the n sentences in part but have a matching degree within a predetermined matching range, determining that the recognizing of the segmented sentences is successful.

4. The method according to claim 3, **characterized in that**, the method further comprises the steps of:
if the earliest successfully recognized sentence among the n sentences is not the 1^{st} sentence, segmenting (5a05) all the sentences from the 1^{st} sentence to a sentence immediately before the earliest successfully recognized sentence into m word segmentations arranged in order, m being a positive integer;
from the start position of a recognized content of the earliest successfully recognized sentence, recognizing (5a06) the m word segmentations in reverse order; and
taking (5a06) the start position of a recognized content of the last successfully recognized word segmentation as a corresponding start position of the original character string in the electronic publication after revision.

5. The method according to claim 3 or 4, **characterized in that**, the method further comprises the steps of:
if the last successfully recognized sentence among the n sentences is not the n^{th} sentence, segmenting (5a07) all the sentences from a sentence immediately after the last successfully recognized sentence to the n^{th} sentence into q word segmentations arranged in order, q being a positive integer;
from the end position of a recognized content of the last successfully recognized sentence, sequentially recognizing (5a08) the q word segmentations; and
taking (5a08) the end position of a recognized content of the last successfully recognized word segmentation as a corresponding end position of the original character string in the electronic publication after revision.

6. A device for updating user data, **characterized in that**, the device comprises:
an acquiring module (601) configured to acquire an original character string, which corresponds to a quoted content in user data, in an electronic publication before revision;
a recognizing module (602) configured to recognize the original character string in the electronic publication after revision; and
an updating module (603) configured to, when the recognizing is successful, update the quoted content in the user data according to a recognizing result to obtain updated user data.

7. The device according to claim 6, **characterized in that**, the recognizing module (602) is configured to directly recognize the original character string in the electronic publication after revision;
or,
the recognizing module (602) is configured to segment the original character string into n sentences arranged in order, n being a positive integer; and sequentially match the n sentences in the electronic publication after revision;
or,
the matching module (603) is configured to directly recognize the original character string in the electronic publication after revision; when the recognizing is not successful, segment the original character string into n sentences arranged in order, n being a positive integer; and sequentially recognize the n sentences in the electronic publication after revision.

8. The device according to claim 7, **characterized in that**, the recognizing module (602) comprises:
a recognizing unit configured to recognize the i^{th} sentence from a searching start position, 1 ≤i≤n; when i=1, the searching start position being the start position of a chapter where the original character string is located;
a position updating unit configured to, when the recognizing of the i^{th} sentence is successful, update the searching start position to be the end position of a recognized content of the i^{th} sentence, and recognize the (i+1)^{th} sentence from the updated searching start position, i+1 ≤n;
a continued recognizing unit configured to, when the recognizing of the i^{th} sentence is not successful, recognize the (i+1)^{th} sentence from a searching position corresponding to the i^{th} sentence; and
a determining unit configured to, after completion of recognizing of all the n sentences, if there exist recognized contents which completely match with the n sentences or if there exist recognized contents which match with the n sentences in part but have a matching degree within a predetermined matching range, determine that the recognizing of the segmented sentences is successful.

9. The device according to claim 8, **characterized in that**, the device further comprises:
a first word segmentation unit configured to, if the earliest successfully recognized sentence among the n sentences is not the 1^{st} sentence, segment all the sentences from the 1^{st} sentence to a sentence immediately before the earliest successfully recognized sentence into m word segmentations arranged in order, m being a positive integer;
a word segmentation recognizing unit configured to, from the start position of a recognized content of the earliest successfully recognized sentence, recognize the m word segmentations in reverse order; and
a start determining unit configured to take the start position of a recognized content of the last successfully recognized word segmentation as a corresponding start position of the original character string in the electronic publication after revision.

10. The device according to claim 8 or 9, **characterized in that**, the device comprises:
a second word segmentation unit configured to, if the last successfully recognized sentence among the n sentences is not the n^{th} sentence, segment all the sentences from a sentence immediately after the last successfully recognized sentence to the n^{th} sentence into q word segmentations arranged in order, q being a positive integer;
a word segmentation recognizing unit configured to, from the end position of a recognized content of the last successfully recognized sentence, sequentially recognize the q word segmentations; and
an end determining unit configured to take the end position of a recognized content of the last successfully recognized word segmentation as a corresponding end position of the original character string in the electronic publication after revision.

11. A computer program including instructions for executing the steps of a method for updating user data according to any one of claims 1 to 5 when said program is executed by a computer.

12. A recording medium readable by a computer and having recorded thereon a computer program including instructions for executing the steps of a method for updating user data according to any one of claims 1 to 5.
